# EUROPÄISCHE PATENTSCHRIFT

(11) **EP 0 941 844 B1**
(45) Veröffentlichungstag und Bekanntmachung des Hinweises auf die Patenterteilung: **23.10.2002**
(21) Anmeldenummer: 99104463.7
(22) Anmeldetag: 05.03.1999
(51) Int. Cl.: B41F 22/00, B41F 21/00, B23K 26/00, B65H 29/52

(54) **Bogenleiteinrichtung**
Sheet guiding device
Dispositif de guidage de feuilles

(30) Priorität: 11.03.1998 DE 19810387
(43) Veröffentlichungstag der Anmeldung: 15.09.1999
(73) Patentinhaber: Autz + Herrmann GmbH, 69115 Heidelberg (DE)
(72) Erfinder: Autz, Helmut, 69121 Heidelberg (DE)
(74) Vertreter: Patentanwälte Rüger, Barthelt & Abel

(56) Entgegenhaltungen:
- EP-A- 0 725 025
- EP-A- 0 786 339
- DE-A- 3 407 770
- DE-A- 4 209 067
- DE-A- 4 406 847
- DE-U- 9 418 358

## Beschreibung

Die Erfindung betrifft eine Bogenleiteinrichtung insbesondere zum berührungsfreien Führen von bedruckten Papierbögen in oder im Anschluss an Druckmaschinen, bspw. in einem an eine Druckmaschine angeschlossenen Trockner.

Beim Offsetbogendruck, insbesondere beim Mehrfarbdruck werden häufig Druckfarben und Dispersionslacke verwendet, deren Trocknung eine gewisse Zeit und Lichtstrahlung (IR, UV) sowie gegebenenfalls Wärme benötigt. Entsprechend müssen die bedruckten Bögen mit noch nicht wischfesten Farben oder Dispersionslacken gehandhabt werden, ohne dass der frische Druck beschädigt wird. Die Bögen müssen abschmierfrei laufen. Die Trocknung der Druckfarben wird häufig durch Wärme beschleunigt. Dazu dienen Trockner, die mit Infrarotstrahlern oder auch UV-Strahlern größerer Leistung von bspw. bis zu 30 KW bestückt sind. Moderne Offsetbogendruckmaschinen sind in der Lage bis zu 21000 Bögen pro Stunde zu bedruken, wobei jeder Bogen maximal 1 m lang sein kann. Daraus ergibt sich eine sehr hohe Fortdruckgeschwindigkeit und Laufgeschwindigkeit der Bögen und eine sehr kurze Verweilzeit im Trockner, woraus sich wiederum die hohen erforderlichen Trocknerleistungen ergeben. Die hohen Wärmeleistungen können jedoch nicht vollständig von den Bögen aufgenommen werden. Nahezu unvermeidbar gelangt ein Teil der Wärme auf Leitbleche, die zur Führung der Bögen in dem Trockner dem Infrarot- oder UV-Strahler gegenüberliegend angeordnet sind. Wärmeeinwirkungen müssen jedoch von der Druckmaschine ferngehalten werden, um deren ordnungsgemäße Funktion nicht zu beeinträchtigen. Es ist deshalb versucht worden die Leitbleche mit einer Wasserkühlung zu versehen, die die überschüssige Wärme abführt.

Dazu ist es aus der DE-9418358 U1 bekannt, als Leiteinrichtung ein Leitblech zu verwenden, an das an seine Rückseite ein weiteres Leitblech im Laserschweissverfahren angeschweisst ist. Die Blechdicken sind dabei unterschiedlich gewählt. Wird der eingeschlossene Zwischenraum mit Druckluft gefüllt, soll das dünnere Leitblech plastisch (bleibend) verformt werden, wodurch eine Wölbung des dünneren Blechs bewirkt und somit ein Hohlkörper ausgebildet wird, der dann als Leiteinrichtung dient.

Ein Verfahren zum Herstellen von Hohlkörpern mit vorgeformten Blechteilen ist bspw. aus der DE 34 07 770 C2 bekannt. Das Verfahren dient der Herstellung von Kraftstofftanks aus Blechhalbschalen gleicher Blechdicke. Beide Blechhalbschalen sind mit einem umlaufenden flanschartigen Rand versehen. Die Ränder werden im Laserschweissverfahren verschweisst. Diese Schweissnaht muss unbedingt gasdicht sein, um ein Austreten von Kraftstoff zu verhindern. Um dies zu erreichen, ist es erforderlich bei dem Laserschweissvorgang einen großen Anpressdruck zwischen den beteiligten Blechteilen aufzubauen. Dazu wird der Flansch einer Halbschale im Bereich der auszubildenden Schweissnaht mit einer Sicke versehen, die bezüglich der gegenüberliegenden Halbschale als Vorsprung in Erscheinung tritt. Die Sicke hat dabei etwa die Tiefe der Blechdicke und die Breite der später auszubildenden Schweissnaht. Eine Andrückkraft zwischen den Halbschalen wird vollständig von der Sicke übertragen, so dass es hier, d.h. im Bereich der auszubildenden Schweissnaht beim Schweissen zu einer Kraftkonzentration und somit zu einer innigen Materialverbindung kommt. Um die Flächenpressung im Bereich der Sicke möglichst groß zu machen, muss die Sicke möglichst schmal ausgebildet werden, d.h. nicht breiter als der Laserstrahl sein. Dadurch wird die gewünschte nahezu linienhafte Berührung zwischen den zu verschweissenden Teilen erreicht.

Bei Leiteinrichtungen für bedruckte Bögen kommt es jedoch nicht auf eine womöglich crash-sichere, gasdichte Verbindung an, wie bei einem Kraftstofftank, sondern auf eine möglichst gute Oberfläche, die zum Leiten von bedruckten Bögen eingerichtet ist. Insbesondere bei Druckmaschinen, die die Bögen beidseitig bedrucken, bspw. auf einer Seite im Schöndruck und auf dem Leitblech zugewandten Seite im Widerdruck oder beidseitig im Schöndruck kommt es darauf an, den Bogen möglichst berührungsfrei zu führen. Die entsprechenden Bogenleiteinrichtungen können deshalb, wie es aus der Praxis bekannt ist, mit Bogenleiteinrichtungen, sogenannten Bogenleitblechen, geführt werden, die Luftdüsen aufweisen. Diese erzeugen ein Luftpolster auf dem der bedruckte Bogen entlang geführt wird. Dabei kommt es darauf an, dass der Bogen auch bei hohen Transportgeschwindigkeiten so sicher auf dem Luftpolster gleitet, dass eine Beschädigung eines Drucks auf der dem Leitblech zugewandten Seite des Bogens vermieden wird. Außerdem sollen die Bögen mit einer der Leistung der Druckmaschine entsprechenden Geschwindigkeit durch den Trockner geführt werden, was entsprechend hohe Trocknerleistungen und in der Folge entsprechend hohe Kühlleistungen an der Bogenleiteinrichtung erfordert.

Aus der EP-A-0786339 ist eine Bogenleitvorrichtung bekannt, zu der ein gekühltes Bogenleitblech gehört. Dieses weist ein Deckblech auf, dessen glatte Seite vorbeizuführenden Bögen zugewandt ist. Das Deckblech ist rückseitig mit einem weiteren Blech verschweißt, das mit dem Deckblech Kühlkanäle definiert. Zur Herstellung der Schweißnähte dienen Schweißpunkte, die im Laserschweißverfahren von der Rückseite her erzeugt werden. Diese Verbindung erfordert eine zusätzliche Abdichtung, die durch Dichtungsringe erzeugt werden. Die Dichtungsringe sind von entsprechenden Sicken aufgenommen, die an dem Innenumfang von Öffnungen vorgesehen sind, die in dem rückseitigen Blech ausgebildet sind.

Außerdem ist aus der EP-A-0725025 eine Bogenleiteinrichtung für Druckmaschinen bekannt, zu der ein gekrümmtes Deckblech gehört, das eine Bogenlaufbahn definiert. Das Deckblech enthält Luftdüsen, die über einen rückseitigen Luftkasten, der mit Blasluft oder Saugluft beaufschlagbar ist.

Davon ausgehend ist es Aufgabe der Erfindung, eine Bogenleiteinrichtung zur beschädigungsfreien Führung beidseitig bedruckter Bogen zu schaffen.

Diese Aufgabe wird durch die Bogenleiteinrichtung gelöst, die die Merkmale des Patentanspruchs 1 aufweist.

Die erfindungsgemäße Bogenleiteinrichtung weist eine Oberfläche auf, die es auch in Bereichen, in denen rückseitig weitere Elemente befestigt sind, ermöglicht, dass bedruckte Bögen auf einem Luftpolster von dem und an dem Leitblech geführt werden, ohne dass diese Farbe auf dem Leitblech lassen. Dies wird erreicht, indem das Leitblech eben oder um lediglich eine Achse gekrümmt (Zylinderabschnitt) ausgebildet wird, während es Vertiefungen zu Ausbildung von Laserschweißnähten aufweist.

Im Wesentlichen ist die gekühlte Bogenleiteinrichtung aus einem Deckblech und einem rückseitigen Blech aufgebaut, wobei das Deckblech und das rückseitige Blech miteinander laserverschweisst sind. Dadurch wird es möglich, zwischen dem Deckblech und dem rückseitigen Blech einen Kühlmittelraum auszubilden, wobei das in dem Kühlmittelraum vorhandene Kühlmittel das Deckblech unmittelbar kühlt, was hohe Kühlleistungen ermöglicht.

Das Deckblech und das rückseitige Blech sind bei entsprechenden Verbindungsbereichen mit Laserschweissnähten untereinander verbunden. Diese sind in Vertiefungen angeordnet, die in dem Deckblech an seiner glatten Seite ausgebildet sind. Dies hat zur Folge, dass von der Schweissnaht ausgehende Verformungen, Verwerfungen und Rauigkeiten von den entsprechenden Vertiefungen aufgenommen werden. Durch die Schweissnaht verursachte mikroskopische Erhebungen oder Verwerfungen ragen somit nicht aus den Vertiefungen heraus und können einen über das Leitblech laufenden Bogen nicht berühren. dabei hat sich gezeigt, dass die Vertiefungen ein sich zwischen dem Bogen und dem Leitblech aufbauendes Luftpolster nicht stören und auch bei schnelllaufenden Bögen keine unerwünschten Wirbel herbeiführen. Dies, obwohl die von den Vertiefungen gebildeten Unregelmäßigkeiten oder Abweichungen der dem Bogen zugewandten Seite des Deckblechs von der Idealform größer sind als die von der Schweissnaht her hervorgerufenen Abweichungen.

Die erfindungsgemäße Bogenleiteinrichtung ermöglicht somit bei einfachem, kostengünstigem und materialsparendem Aufbau hohe Kühlleistungen und hohe Bogenlaufgeschwindigkeiten. Sind Mittel zur Ausbildung eines Luftpolsters zwischen den Bögen und dem Bogenleitblech vorgesehen können beidseitig bedruckte Bögen (Schöndruck/-Widerdruck oder Schöndruck/Schöndruck) über das Bogenleitblech geführt werden, ohne dass es zu Farbablagerungen auf dem Bogenleitblech bzw. Beschädigungen des Drucks an dem Bogen kommt. Darüberhinaus hat sich gezeigt, dass sich mit dem erfindungsgemäßen Verfahren zu Herstellung von Bogenleiteinrichtungen Bogenleiteinrichtungen erzeugen lassen, deren Deckblech nahezu vollkommen eben ist. Die beim Laserschweissen auftretenden thermischen Spannungen und Verformungen bleiben auf den Bereich der ausgebildeten Vertiefungen beschränkt und verziehen die übrige Oberfläche des Deckblechs nicht. Dadurch werden dünne Luftpolster möglich, auf denen die Bögen präzise geführt sind, ohne an Erhebungen des Bogenleitblechs anzustossen.

Die Laserschweissnaht ist vorzugsweise von der Rückseite des Deckblechs her ausgebildet. Damit trifft der Laserstrahl beim Laserschweissen nicht auf die dem Bogen zugewandte Seite der Bogenleiteinrichtung, sondern auf das rückseitig angeschweisste Element, d.h. bspw. das rückseitige Blech. Sich auf der glatten Seite des Deckblechs abzeichnende Oberflächenveränderungen des Deckblechs, die auf die Wärmebeanspruchung bei dem Schweissvorgang zurückgehen, sind auf dem Bereich der Vertiefung beschränkt und beeinträchtigen somit die Oberflächengüte des Deckblechs in den Bereichen, auf die es ankommt, nicht. Dazu ist die Vertiefung in dem Deckblech tiefer als jede von der Laserschweissnaht hervorgerufene Verformung. Die Tiefe der Vertiefung liegt dabei im Beriech von wenigen Zehntel Milimetern, bspw. bei 2 bis 3/10 mm. Dies genügt um thermische Spannungen von dem Deckblech fernzuhalten, das bspw. deutlich dicker als das rückseitige Blech ausgebildet ist. Auch dadurch kann die thermische Belastung der vorzugsweise spiegelblanken Vorderseite des Deckblechs (3D-Oberfläche) minimiert werden.

Zur Verbindung zwischen dem Deckblech und den rückseitigen Elementen können ein oder mehrere Vertiefungen vorgesehen sein, die vorzugsweise als Sicken (Ringsicken) ausgebildet sind. Die Breite dieser Sicken übersteigt dabei vorzugsweise die Breite eine Laserschweissnaht deutlich. Dies hält von der Laserschweissnaht hervorgerufene Verformungen von den Deckblechbereichen fern, die außerhalb der Sicke liegen. Außerdem ergibt sich die Möglichkeit der Nachbearbeitung, d.h. bei einzelnen Fehlstellen der Laserschweissnaht kann neben der fehlerhaften Laserschweissnaht eine zweite Naht gesetzt werden, die die fehlerhafte Naht nicht überschneidet (überkreuzt) und letztendlich die gewünschte bspw. fluiddichte Verbindung herstellt. Das Deckblech kann mit Luftdüsen versehen sein, die bspw. einstückig an dem Deckblech ausgebildet sind. Dies gelingt, indem das Deckblech mit Einschnitten versehen wird, wobei ein einseitig an den Einschnitt grenzender Bereich zu der Rückseite hin ausgebogen wird. Auf diese Weise können Luftdüsen ausgebildet werden, die Hebe- und/oder Transportfunktionen übernehmen. Dies kann durch entsprechende Schrägstellung der Luftdüsen erreicht werden.

Das rückseitige Blech ist an seinem Außenrand mit dem Deckblech verbunden. Entsprechend ist die dazu in dem Deckblech ausgebildete Sicke vorzugsweise im wesentlichen rechteckförmig. Bei einer vorteilhaften Ausführungsform sind die sich quer zu dem Bogenlaufweg erstreckenden Abschnitte der Sicke schräg angeordnet. Bspw. folgen sie einer Wellenlinie oder einer Zick-Zack-Linie. Dadurch wird ein Anstoßen der darüber laufenden Bögen verhindert.

Regelmäßig angeordnete Verbindungsstellen zwischen dem Deckblech und dem rückseitigen Blech halten das Deckblech gegen den Druck des Kühlmediums eben. Die Verbindungsstellen werden durch bspw. napfförmige Erhebungen auf dem rückseitigen Blech gebildet. Die Verbindung kann durch eine ringförmige Laserschweißnaht oder ein oder mehrere punkt- oder fleckartige Schweißstellen gebildet sein.

Vorteilhafte Einzelheiten von Ausführungsformen der Erfindung sind Gegenstand von Unteransprüchen und ergeben sich aus der Zeichnung und/oder der zugehörigen Beschreibung. In der Zeichnung sind Ausführungsbeispiele der Erfindung veranschaulicht. Es zeigen:
- Figur 1: eine Offsetbogendruckmaschine mit Trockner und Bogenausleger in einer schematisierten Schnittdarstellung;
- Figur 2: ein Bogenleitblech, das in der Druckmaschine nach Fig. 1 in dem Trockner angeordnet ist in einer schematisierten, perspektivischen Darstellung;
- Figur 3: das Bogenleitblech nach Fig. 2, in einer perspektivischen Ansicht auf seine Unterseite;
- Figur 4: das Bogenleitblech nach den Fig. 2 und 3 in einer ausschnittsweisen Schnittdarstellung, in einem anderen Maßstab;
- Figur 5: das Bogenleitblech nach Fig. 4 in einer ausschnittsweisen vergrößerten Darstellung zur Veranschaulichung der Schweissverbindung zwischen seinem Deckblech und seinem rückseitigen Blech und
- Figur 6: ein bogenförmiges Leitblech der Druckmaschine nach Fig. 1 in schematisierter Schnittdarstellung.

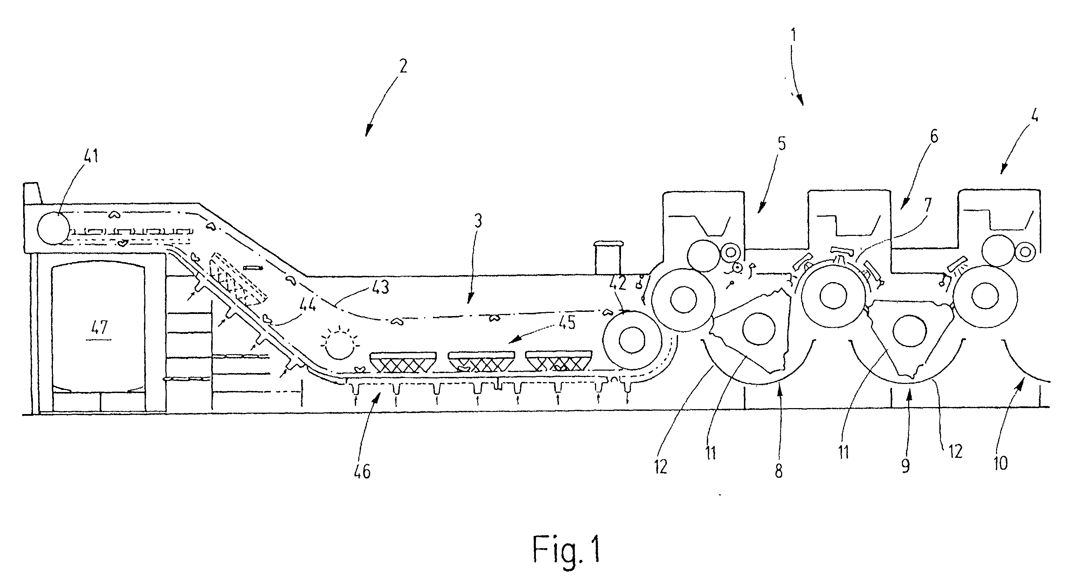

In Fig. 1 ist eine Offsetbogendruckmaschine 1 veranschaulicht, an die sich ein Bogenausleger 2 mit Trockner 3 anschliesst. Die Offsetbogendruckmaschine 1 ist lediglich anhand ihrer letzten beiden Lackwerke 4, 5 sowie einer Zwischenstation 6 veranschaulicht, wobei sie jedoch vorgelagert weitere Stationen und Elemente, insbesondere eine Wendestation aufweist, so dass zu bedruckende Bögen 7 auf Vorder- und Rückseite bedruckbar sind. Zwischen den einzelnen Stationen 4, 6, 5 sowie weiteren Stationen sind Transferterkästen 8, 9, 10 angeordnet, zu denen jeweils ein Transferter 11 (Bogenübergeeinrichtung) sowie ein Transferterblech 12 gehören. Der Transferter 11 ist dazu eingerichtet, den Bogen an seiner vorauseilenden Kante zu ergreifen und zur jeweils nächsten Walze zu transportieren. Das Transferterblech 12 verhindert das Wegschleudern des Bogens von dem Transferter infolge der bei hohen Drehzahlen auftretenden Fliehkraft.

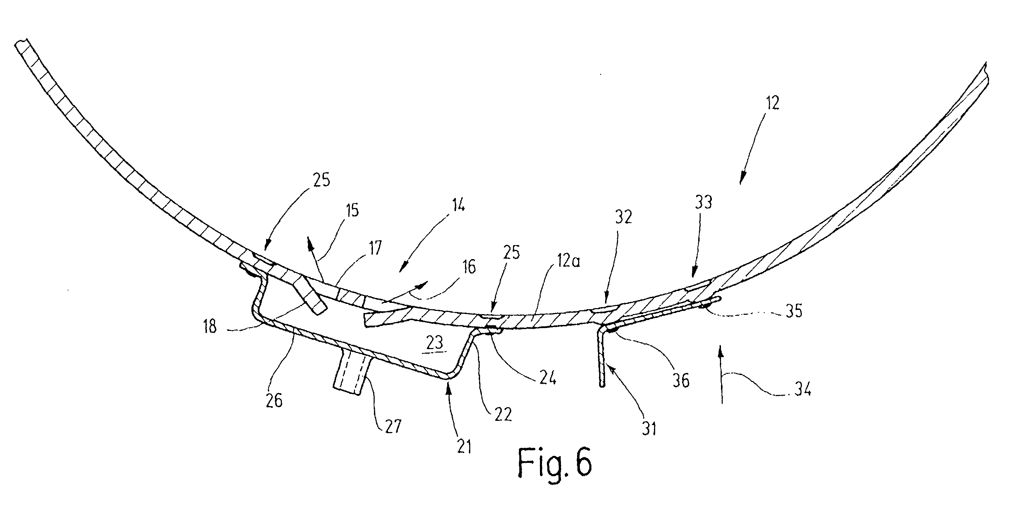

Das Transferterblech 12 ist in Fig. 6 gesondert veranschaulicht. Es kann ein- oder doppelwandig ausgebildet sein. An seiner dem in Fig. 6 nicht weiter veranschaulichten Bogen zugewandten, radial innen liegenden Seite weist das aus 1 bis 2 mm dicken Edelstahl bestehende Transferterblech 12 eine spiegelnd polierte Oberfläche auf. Zur Ausbildung eines Luftpolsters zwischen dem Transferterblech 12 und dem mit Fliehkraft auf das Transferterblech 12 hin gedrückten Bogen kann das Transferterblech 12 mit Luftdüsen 14 versehen sein, aus denen Luft in Richtung der Pfeile 15, 16 zur Ausbildung eines Luftkissens austritt. Die Luftdüsen 14 sind bspw. durch einen Schnitt 17 gebildet, von dem eine Tasche 18 radial nach außen weg gebogen ist.

Die Luftdüsen 14 übergreifend ist von der Außenseite her ein Luftkasten 21 an das Transferterblech 12 angeschweisst. Der Luftkasten 21 kann dabei über einen Teil oder die gesamte Breite des Transferterblechs 12 (senkrecht zur Zeichenebene) sowie bezüglich der Bewegungsrichtung des Bogens über die gesamte Länge des Transferterblechs oder, wie dargestellt, lediglich über einen Teil derselben ausgebildet sein. Der Luftkasten 21 weist einen Rand 22 auf, dessen freies Ende 22a flach an der Rückseite des Transferterblechs 12 anliegt. Zur Abdichtung des von dem Luftkasten 21 definierten Innenraums 23 nach außen und zur Befestigung des Luftkastens 21 dienen Laserschweissnähte 24, die den gesamten Rand 22 des Luftkastens 21 entlang um den Luftkasten 21 herumlaufen. Im Bereich der Laserschweissnaht 24 sowie des Randes 22 weist das Tranferterblech 12 eine Ringsicke 25 auf, die bspw. 2/10 mm tief ist. Die Laserschweissnaht 24 ist dabei an der der Ringsicke 25 gegenüberliegenden Außenseite des Tranferterblechs 12 angeordnet.

Bei der Herstellung des Transferterblechs 12 wird wie folgt vorgegangen:

Zunächst wird ein bogenförmiges Deckblech 12a vorbereitet, indem an seiner polierten Innenseite eine Ringsicke 25 eingeprägt wird. Zur Herstellung des Luftkastens 21 wird ein entsprechendes rückseitiges Blech 26 vorgebogen und mit einem Anschluß 27 zur Speisung des Innenraums 23 versehen. Insbesondere aber wird der Rand 22, 22a gebogen. Zur Verbindung des rückseitigen Blechs 26 mit dem Deckblech 12a wird das rückseitige Blech 26 mit seinem Rand 22, 22a radial außen an das Deckblech 12a so angesetzt, dass die Ringsicke 25 mit dem Rand 22 übereinstimmt. In einem nächsten Arbeitsschritt wird bezogen auf die Krümmung des Transferterblechs 12 von der radial äußeren Seite her ein Laserstrahl auf den Rand 22, 22a im Bereich der auszubildenden Laserschweissnaht 24 gesetzt und an dem Randbereich 25 entlag geführt. Die Erhitzung ist dabei so stark, dass die Wärme bis in den Bereich der Ringsicke 25 gelangt und das Deckblech 12a mit dem rückseitigen Blech 26 verschweisst. Jedoch hält die Ringsicke 25, deren Tiefe wesentlich geringer ist als die Dicke des Deckblechs 12a (1 bis 2mm), entstehende thermische Spannungen von der polierten Oberfläche (Innenseite) des Deckblechs 12a fern.

Auf ähnliche Weise kann bspw. eine Halterung 31 an dem Deckblech 12a angebracht werden. Anstelle der Ringsicke 25 genügen hier jedoch einzelne Vertiefungen 32, 33, die von der Innenseite, d.h. der dem Bogen zugewandten Seite her in das Deckblech 12a angeformt sind. Die Halterung 31, die bspw. durch einen Blechwinkel gebildet sein kann und deren Blechdicke vorzugsweise deutlich geringer ist als die des Deckblechs 12a, bedarfsweise aber auch größer sein kann, wird nun im Bereich der Vertiefungen 32, 33 mittels Laser von der Rückseite her (Pfeil 34) erwärmt so, dass sich Schweissstellen 35, 36 ausbilden. Die von diesen ausgehenden Mikrodeformationen der Oberfläche des Deckblechs 12a liegen im Bereich der Vertiefungen 32, 33 und stören somit die Oberfläche des Deckblechs 12a nicht.

Der in Fig. 1 veranschaulichte Ausleger 2 weist eine um Rollen 41, 42 geführte Kette 43 mit Greifern 44 für den Bogentransport auf. Die Bögen werden dabei durch den Trockner 3 transportiert, in dem z.B. mehrere Infrarotstrahler 45 zur Trocknung der Bögen angeordnet sind. Den Infrarotstrahlern gegenüberliegend sind wassergekühlte Bogenleiteinrichtungen angeordnet. Diese dienen dazu, die Bögen möglichst berührungsfrei auf einem vorgegebenen Weg durch den Trockner 3 zu führen, bevor sie auf einem Stapel 47 abgestapelt werden.

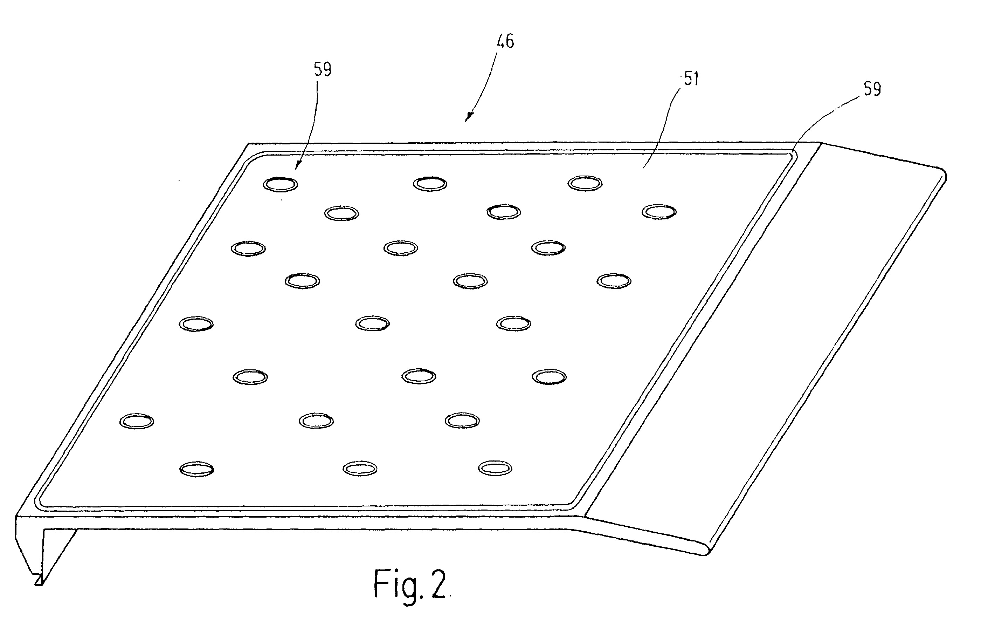

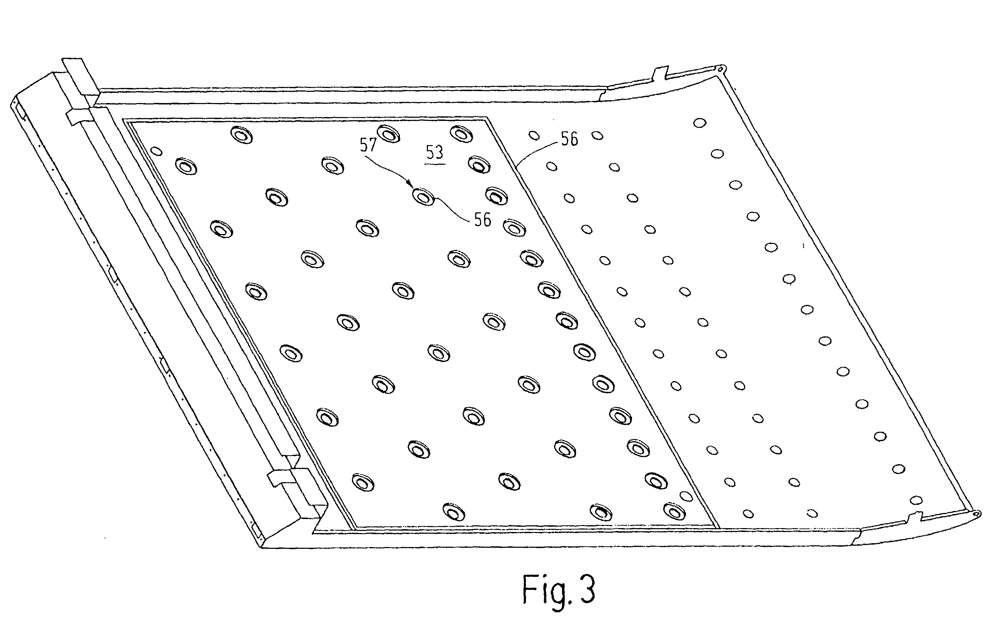

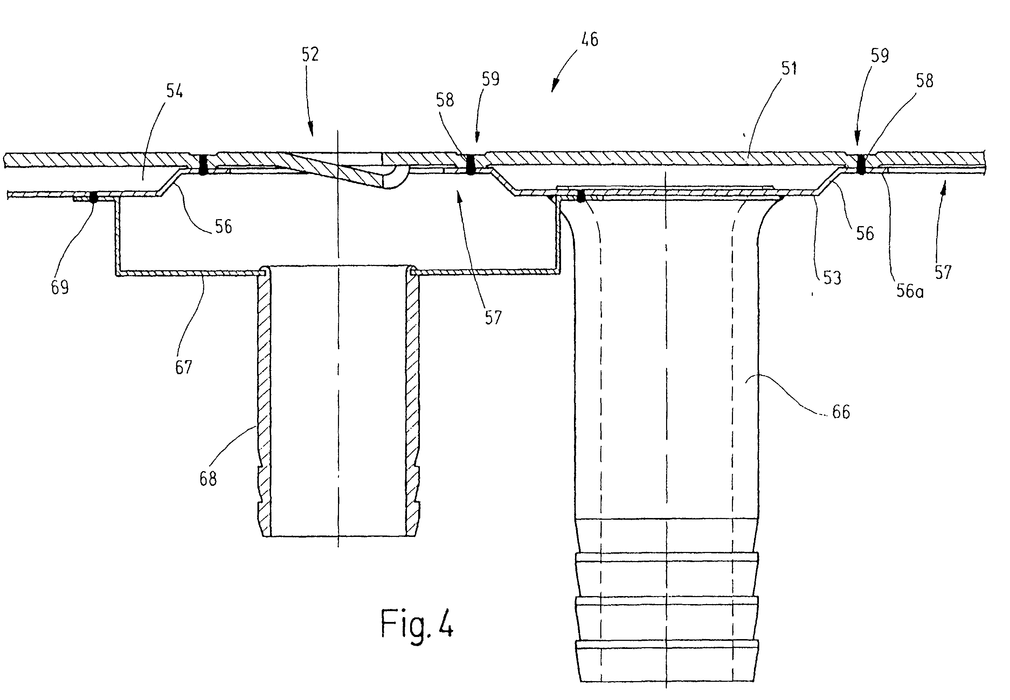

Die Bogenleiteinrichtung 46 ist gesondert in Fig. 2 veranschaulicht. Sie weist ein im Wesentlichen planes Deckblech 51 auf, an dessen im Wesentlichen planer Oberseite Luftdüsen 52 angeordnet sind. Diese sind in den Fig. 2 und 3 der Übersichtlichkeit wegen weggelassen, jedoch aus Fig. 4 ersichtlich. Das Deckblech 51 ist aus Edelstahl gefertigt und weist eine spiegelnd polierte Oberfläche auf. Die Luftdüsen 52 sind so ausgerichtet, dass sie einen über das Deckblech 51 geführten Bogen anheben und in Seitenrichtung glattziehen. Dazu sind bspw. jeweils drei Luftdüsen 52 gruppenweise so angeordnet, dass ihre jeweils spitzwinklig zu dem Bogen oder der Oberseite des Deckblechs 51 ausgerichteten Blasrichtungen ein Dreieck festlegen. andere Luftdüsen sind einzeln so angeordnet, dass sie den Bogen seitlich nach außen und nach vorn transportieren. Dies ergibt einen Glattzieheffekt an dem Bogen.

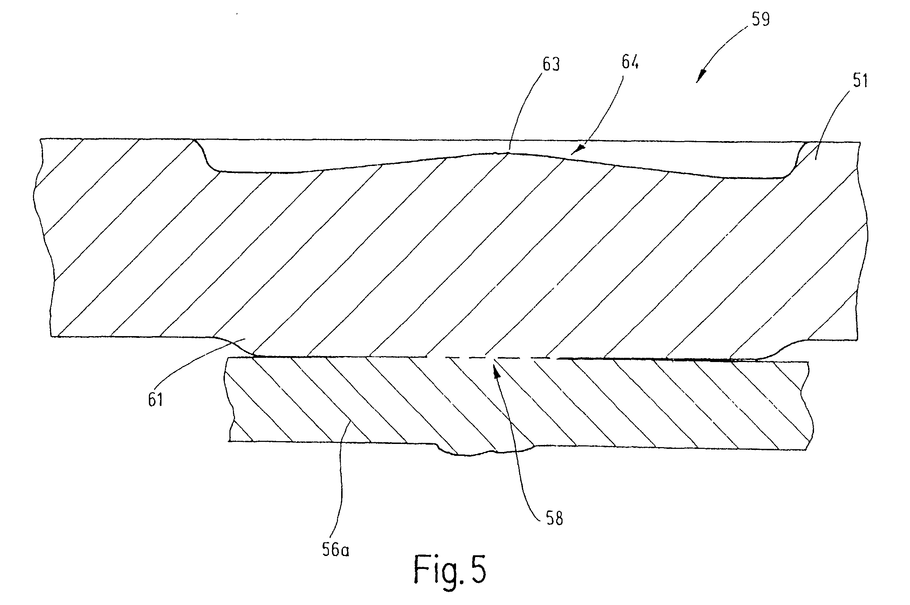

Das Deckblech 51 der Bogenleiteinrichtung 46 ist bspw. wassergekühlt. Dazu ist es, wie aus den Fig. 3 und 4 hervorgeht, an seiner Unterseite, d.h. an seiner dem Bogen abgewandten Seite mit einem rückseitigen Blech 53 unter Ausbildung einer oder mehrerer Kühlmittelkammern 54 verbunden. Während das relativ dicke, d.h. etwa 1,5 mm starke Deckblech 51 plan ausgebildet ist, sind an dem vergleichsweise dünneren rückseitigen Blech 53 hochgebogene Ränder 56 vorgesehen, die einen Abstand des übrigen rückseitigen Blechs 53 zu dem Deckblech 51 herstellen. Die hochgebogenen Ränder 56 sind sowohl an dem Außenumfang des rückseitigen Blechs 53 als auch bei Durchbrüchen 57 vorgesehen, die bspw. den Zugang zu den Luftdüsen 52 ermöglichen (Fig. 4 links) oder lediglich der Befestigung des rückseitigen Blechs 53 an dem Deckblech 51 in der Fläche dienen (Fig. 4 rechts), um Aufwölbungen des rückseitigen Blechs 53 durch Kühlmitteldruck zu verhindern. Das rückseitige Blech 53 weist an seinem Rand 56 einen Abschnitt 56a auf, der sich flächenparallel zu dem Deckblech 51 erstreckt. Dieser Bereich definiert einen Verbindungsbereich, in dem eine Laserschweissnaht 58 zur Verbindung mit dem Deckblech 51 ausgebildet ist. Die Laserschweissnaht trifft das Deckblech 51 dabei im Bereich von sickenartigen Vertiefungen 59, die in dem Deckblech 51 untergebracht und in Fig. 5 gesondert dargestellt sind. Die sickenartige Vertiefung 59 weist eine Tiefe auf, die deutlich geringer ist als die Dicke des Deckblechs 51. Vorzugsweise liegt sie im Bereich von 1 bis 3/100 mm. An der Rückseite des Deckblechs 51 kann sich beim Ausbilden der Sicke 59, die bspw. 2 bis 4 mm breit sein kann, beim Prägen der Sicke 59 ein gewisser Vorsprung 61 ausbilden. Beim Herstellen der Laserschweissnaht wird das rückseitige Blech 53 im Verbindungsbereich 56a mit einem Laserstrahl beaufschlagt, so dass sich die in Fig. 5 gestrichelt dargestellte Naht (Laserschweissnaht 58) ergibt. Bei der Ausbildung dieser Naht erwärmen sich auch Bereiche des Deckblechs 51, die jedoch vollständig im Bereich der Sicke 59 liegen. Entstehende Oberflächenrauigkeiten 63 oder Verwerfungen 64 bleiben deshalb auf den Bereich der Sike 59 beschränkt und stören die sonstige Oberfläche des Deckblechs 51 nicht. Die Sicke 59 ist demnach so bemessen, dass durch das Laserschweissen von der Rückseite her ausgehende bleibende thermische Veränderungen des Deckblechs 51 auf einen innerhalb der Sicke 59 liegenden Bereich beschränkt werden. Dies gilt sowohl hinsichtlich der Tiefe der Sicke 51 als auch hinsichtlich ihrer Breite.

An dem rückseitigen Blech 53 kann ebenfalls mittels Laserschweissens ein Anschlußstutzen 66 zur Kühlwasserzufuhr, so wie bedarfsweise ein weiterer Anschlußstutzen zur Kühlwasserabfuhr vorgesehen sein. Außerdem kann im Bereich der Luftdüse 52 und des Durchbruchs 57 ein Luftkasten 67 mit Luftanschlußstutzen 68 angeordnet sein. Der Luftkasten 67 dient der Zuführung von Blasluft zu den Luftdüsen 52, um ein Luftpolster zwischen dem Bogen und dem Deckblech 51 auszubilden. Der Luftkasten 67 kann mittels Laserschweissnaht 69 mit dem rückseitgen Blech 53 oder bedarfsweise auch direkt mit dem Deckblech 51 verbunden sein.

Das insoweit beschriebene Bogenleitblech 46 wird folgendermaßen hergestellt:

Das entsprechend vorgerichtete Deckblech 51 erhält zur Vorbereitung der Verbindung mit dem rückseitigen Blech 53 zunächst die Sicken 59 in einem Prägearbeitsgang. Dabei wird wie aus Fig. 2 ersichtlich eine Sicke 59 nahezu rechteckig in einem Bereich eingeprägt an dem später der Außenrand des rückseitigen Blechs 53 befestigt werden soll. Zugleich oder in einem vor bzw. nachgeordneten Arbeitsschritt werden eine Vielzahl ringförmiger Sicken oder bedarfsweiser auch einfacher Vertiefungen in der Fläche des Deckblechs 51 ausgebildet, um Zwischenbefestigungen zu dem rückseitigen Blech 53 herzustellen.

Das rückseitige Blech 53 wird vor dem Verbinden mit dem Deckblech 51 in ein oder mehreren Arbeitsschritten mit seinem Rand 56/56a versehen. Nachfolgend wird das rückseitige Blech 53 an die Rückseite des Deckblechs 51 angesetzt. Die Verbindung wird durch Laserschweissen hergestellt, wobei der Laserstrahl auf dem rückseitigen Blech 53 bzw. dessen Verbindungsbereich 56a entlang geführt wird. Die Erwärmung des Deckblechs 51 wird dadurch in Grenzen gehalten. Außerdem wird die Laserschweissnaht 58 ausschliesslich an den den Sicken 59 gegenüberliegenden Bereichen des Deckblechs 51 angeordnet.

Insbesondere für Druckmaschinen bzw. nachgeordnete Einrichtungen sind Bogenleiteinrichtungen 46 vorgesehen, an deren Rückseite weitere Teile, bspw. ein rückseitiges Blech 53 zur Ausbildung von Kühlmittelkanälen 54 zur Kühlung des Deckblechs 51 angeordnet sind. Zur Verbindung dienen Laserschweissnähte 58 die zumindest, soweit die glatte Oberseite des Deckblechs 51 betroffen ist, ausschliesslich im Bereich von Sicken 59 oder sonstigen Vertiefungen angeordnet sind. Thermische Einflüsse beim Herstellen der Laserschweissnaht 58 werden somit von der übrigen Oberfläche des Deckblechs 51 getrennt.

## Patentansprüche

1. Bogenleiteinrichtung (12, 46), insbesondere für Druckmaschinen (1) sowie Ausleger (2) und Trockner (3) an Druckmaschinen (1),
mit einem Deckblech (12a, 51), das eine glatte Seite aufweist, die vorbeizuführenden Bögen (7) zugewandt ist,
mit wenigstens einem rückseitig an dem Deckblech (12, 51) befestigten Element (21, 31, 53), das wenigstens einen, einem Verbindungsbereich zugeordneten Verbindungsabschnitt (22, 56) aufweist, bei dem das rückseitige Element (21, 31, 53) an dem Deckblech (51) anliegt, wobei das rückseitige Element (21, 31, 53) mit dem Deckblech (51) durch Laserschweißnähte (24, 35, 36, 58) verbunden ist, die die Verbindung zu dem Deckblech (51) an den von den Vertiefungen (25, 32, 33, 59) festgelegten Verbindungsbereichen herstellen,
**dadurch gekennzeichnet,**
**dass** in dem Deckblech (51) von der glatten Seite her wenigstens eine Vertiefung (25, 32, 33, 59) ausgebildet ist, die wenigstens den Verbindungsbereich festlegt und
**dass** die in dem Deckblech (12a, 51) ausgebildete Vertiefung (25, 32, 33, 59) tiefer ist als jede von der Laserschweißnaht (24, 35, 36, 58) hervorgerufene Verformung.

2. Bogenleiteinrichtung nach Anspruch 1, **dadurch gekennzeichnet, dass** das rückseitige Element (21, 31, 53) ein Blech ist, an dem die den Verbindungsbereichen zugeordneten Verbindungsabschnitte (22, 56) ausgebildet sind, und
dass zwischen dem Deckblech (51) und dem rückseitigen Blech (53) eine Fluidkammer (23, 54) ausgebildet ist, die über wenigstens einen Anschluß (27, 66) zugänglich ist.

3. Bogenleiteinrichtung nach Anspruch 2, **dadurch gekennzeichnet, dass** die Fluidkammer eine Kühlmittelkammer (54) ist, die einen Eingangsanschluß und einen Ausgangsanschluß (66) aufweist und von der aus das Deckblech (51) von seiner Rückseite her in unmittelbarem Wärmeaustausch mit dem Kühlmittel steht.

4. Bogenleiteinrichtung nach Anspruch 2, **dadurch gekennzeichnet, dass** die Fluidkammer (23) eine Luftkammer ist, deren Anschluß (27) der Zu- oder Abführung von Luft dient.

5. Bogenleiteinrichtung nach Anspruch 1, **dadurch gekennzeichnet, dass** die Laserschweißnaht (24, 35, 36, 58) von dem rückseitigen Element (21, 31, 53) ausgehend ausgebildet ist.

6. Bogenleiteinrichtung nach Anspruch 1 oder 3, **dadurch gekennzeichnet, dass** das Deckblech (12a, 51) eine größere Dicke aufweist als das rückseitige Element (21, 31, 53).

7. Bogenleiteinrichtung nach Anspruch 6, **dadurch gekennzeichnet, dass** die Dicke des Deckblechs (51) mehr als doppelt so groß ist wie die des rückseitigen Elements (21, 31, 53) an der Laserschweißnaht (24, 35, 36, 58).

8. Bogenleiteinrichtung nach Anspruch 1, **dadurch gekennzeichnet, dass** das Deckblech (51) ein Edelstahlblech ist, das vorzugsweise eine polierte Oberfläche aufweist, deren Oberflächengüte einer 3D-Oberfläche entspricht.

9. Bogenleiteinrichtung nach Anspruch 1, **dadurch gekennzeichnet, dass** das rückseitige Element (21, 53) einen im wesentlichen rechteckigen Umriß aufweist, in dessen Nachbarschaft das Element (21, 53) mit dem Deckblech (51) verbunden ist, und dass das rückseitige Element (21, 53) von seinem Rand beabstandete Erhebungen (22, 56) aufweist, bei denen das Element mit dem Deckblech (12a, 51) verbunden ist.

10. Bogenleiteinrichtung nach Anspruch 9, **dadurch gekennzeichnet, dass** die Vertiefung (59) in dem Deckblech (51) rechteckig, dem Umriß des rückseitigen Blechs (53) folgend ausgebildet ist.

11. Bogenleiteinrichtung nach Anspruch 9, **dadurch gekennzeichnet, dass** die Vertiefung (59) in Abschnitten, die sich quer zu der Bewegungsrichtung des Bogens erstrecken, in ein oder mehrere sich schräg zu der Querrichtung erstreckende Bereiche unterteilt ist.

12. Bogenleiteinrichtung nach Anspruch 9, **dadurch gekennzeichnet, dass** die Erhebungen (22, 56) untereinander gleich groß und regelmäßig angeordnet sind.

13. Bogenleiteinrichtung nach Anspruch 12, **dadurch gekennzeichnet, dass** einige der Erhebungen (22, 56) mit Durchbrüchen (57) versehen sind.

14. Bogenleiteinrichtung nach Anspruch 1, **dadurch gekennzeichnet, dass** die Vertiefungen (25, 32, 33, 59) in dem Deckblech (12a, 51) als Sicken, vorzugsweise als Ringsicken ausgebildet sind.

15. Bogenleiteinrichtung nach Anspruch 14, **dadurch gekennzeichnet, dass** die Erhebungen (22, 56) mit ringförmigen Laserschweißnähten mit dem Deckblech (51) verbunden sind.

16. Bogenleiteinrichtung nach Anspruch 9, **dadurch gekennzeichnet, dass** einige der Erhebungen (22, 56) mit unterbrochenen Laserschweißnähten, vorzugsweise mit fleck- oder punktförmigen Laserschweißnähten mit dem Deckblech verbunden sind.

17. Bogenleiteinrichtung nach Anspruch 14, **dadurch gekennzeichnet, dass** die Sicken eine Breite aufweisen, die größer ist als die Breite einer Schweißnaht (24, 35, 36, 58).

18. Bogenleiteinrichtung nach Anspruch 14, **dadurch gekennzeichnet, dass** die Breite der Sicken vorzugsweise deutlich größer als doppelt so groß wie die Breite einer Schweißnaht (24, 35, 36, 58) ist.

19. Bogenleiteinrichtung nach Anspruch 13, **dadurch gekennzeichnet, dass** das Deckblech (51) in Bereichen, in denen das rückseitige Element (53) Durchbrüche (57) aufweist, mit Luftdüsen (52) versehen ist, die derart ausgerichtet sind, dass sie einen Luftstrom erzeugen, der auf den Bogen hin gerichtet ist.

20. Bogenleiteinrichtung nach Anspruch 19, **dadurch gekennzeichnet, dass** die Luftdüsen (52) jeweils schräg zu dem Bogen ausgerichtet sind.

21. Bogenleiteinrichtung nach Anspruch 19, **dadurch gekennzeichnet, dass** die Luftdüsen (52) jeweils durch einen Blechbereich gebildet sind, der teilweise freigeschnitten aus der Ebene des Deckblechs (51) herausgebogen ist.

## Claims

1. Sheet guiding device (12, 46), in particular for printing machines (1) as well as delivery means (2) and dryer (3) for printing machines (1),
with a cover plate (12a, 51), which has a smooth side facing the sheets (7) to be directed past it,
with at least one element (21, 31, 53) fastened at the rear side to the cover plate (12, 51) and having at least one connection section (22, 56) allocated to a connection area, at which section the rear-side element (21, 31, 53) abuts against the cover plate (51), the rear-side element (21, 31, 53) being connected to the cover plate (51) by laser welds (24, 35, 36, 58), which create the connection to the cover plate (51) at the connection areas determined by the depressions (25, 32, 33, 59),
**characterised in that**
at least one depression (25, 32, 33, 59), which determines at least the connection area, is constructed in the cover plate (51) starting from the smooth side, and
that the depression (25, 32, 33, 59) constructed in the cover plate (12a, 51) is deeper than each deformation caused by the laser weld (24, 35, 36, 58).

2. Sheet guiding device according to Claim 1, **characterised in that** the rear-side element (21, 31, 53) is a metal plate, on which the connection sections (22, 56) allocated to the connection areas are constructed, and
that a fluid chamber (23, 54), which is accessible via at least one connection (27, 66), is constructed between the cover plate (51) and the rear-side element (53).

3. Sheet guiding device according to Claim 2, **characterised in that** the fluid chamber is a coolant chamber (54), which has an inlet connection and an outlet connection (66) and from which the cover plate (51) from its rear side is in a position for direct heat exchange with the coolant.

4. Sheet guiding device according to Claim 2, **characterised in that** the fluid chamber (23) is an air chamber, the connection (27) of which serves to supply and discharge air.

5. Sheet guiding device according to Claim 1, **characterised in that** the laser weld (24, 35, 36, 58) is constructed to extend from the rear-side element (21, 31, 53).

6. Sheet guiding device according to Claim 1 or 3,
**characterised in that** the cover plate (12a, 51) has a greater thickness than the rear-side element (21, 31, 53).

7. Sheet guiding device according to Claim 6, **characterised in that** the thickness of the cover plate (51) is more than double that of the rear-side element (21, 31, 53) at the laser weld (24, 35, 36, 58).

8. Sheet guiding device according to Claim 1, **characterised in that** the cover plate (51) is a stainless steel plate, which preferably has a polished surface, the surface quality of which corresponds to a 3D-surface.

9. Sheet guiding device according to Claim 1, **characterised in that** the rear-side element (21, 53) has an essentially rectangular contour, in the vicinity of which the element (21, 53) is connected to the cover plate (51), and that the rear-side element (21, 53) has raised sections (22, 56) spaced from its edge, the element being connected to the cover plate (12a, 51) at said raised sections.

10. Sheet guiding device according to Claim 9, **characterised in that** the depression (59) in the cover plate (51) is of rectangular construction to follow the contour of the rear-side plate (53).

11. Sheet guiding device according to Claim 9, **characterised in that** in sections extending transversely to the direction of movement of the sheet, the depression (59) is divided into one or more areas extending obliquely to the transverse direction.

12. Sheet guiding device according to Claim 9, **characterised in that** the raised sections (22, 56) are of the same size and are arranged at regular intervals from one another.

13. Sheet guiding device according to Claim 12, **characterised in that** some of the raised sections (22, 56) are provided with perforations (57).

14. Sheet guiding device according to Claim 1, **characterised in that** the depressions (25, 32, 33, 59) in the cover plate (12a, 51) are in the form of crimps, preferably annular crimps.

15. Sheet guiding device according to Claim 14, **characterised in that** the raised sections (22, 56) are connected to the cover plate (51) with annular laser welds.

16. Sheet guiding device according to Claim 9, **characterised in that** some of the raised sections (22, 56) are connected to the cover plate with interrupted laser welds, preferably with spot- or point-shaped laser welds.

17. Sheet guiding device according to Claim 14, **characterised in that** the crimps have a width which is larger than the width of a weld (24, 35, 36, 58).

18. Sheet guiding device according to Claim 14, **characterised in that** the width of the crimps is preferably clearly more than double the width of a weld (24, 35, 36, 58).

19. Sheet guiding device according to Claim 13, **characterised in that** in areas in which the rear-side element (53) has perforations (57), the cover plate (51) is provided with air nozzles (52), which are aligned in such a way that they generate a stream of air directed towards the sheet.

20. Sheet guiding device according to Claim 19, **characterised in that** the air nozzles (52) are respectively aligned obliquely to the sheet.

21. Sheet guiding device according to Claim 19, **characterised in that** the air nozzles (52) are respectively formed by a plate area, which is partially cut free to curve out of the plane of the cover plate (51).

## Revendications

1. Dispositif de guidage de feuille (12, 46), en particulier pour des machines à imprimer (1) ainsi pour que des releveurs (2) et des sécheuses (3) de machines à imprimer (1),
■ avec une plaque de tôle supérieure (12a, 51) qui présente une face lisse tournée vers les feuilles (7) à acheminer,
■ avec au moins un élément (21, 31, 53) qui est fixé à la plaque de tôle supérieure (12, 51) côté face postérieure, et comporte au moins une partie de liaison (22, 56) associée à une zone de liaison, au niveau de laquelle l'élément arrière (21, 31, 53) est en contact avec la plaque de tôle (51), l'élément arrière (21, 31, 53) étant lié à la plaque de tôle supérieure (51) par des soudures au laser (24, 35, 36, 58) qui réalisent la liaison avec ladite plaque de tôle supérieure (51) au niveau des zones de liaison matérialisées par des dépressions (25, 32, 33, 59),
**caractérisé**
■ **en ce qu'**au moins une dépression (25, 32, 33, 59) est aménagée dans la plaque de tôle supérieure (51) depuis la face lisse, laquelle dépression matérialise la zone de liaison et
■ **en ce que** la dépression (25, 32, 33 59) aménagée dans la plaque de tôle supérieure (12a, 51) a une profondeur qui est supérieure à toute déformation causée par la soudure au laser (24, 35, 36, 58).

2. Dispositif de guidage de feuille selon la revendication 1, **caractérisé**
■ **en ce que** l'élément arrière (21, 31, 53) est une tôle dans laquelle sont aménagées les parties de liaison (22, 56) associées aux zones de liaison,
■ **en ce qu'**entre la plaque de tôle supérieure (51) et la tôle arrière (53) est formée une chambre à fluide (23, 54), accessible à travers au moins un raccord (27, 66).

3. Dispositif de guidage de feuille selon la revendication 2, **caractérisé en ce que** la chambre à fluide est une chambre à fluide de refroidissement (54), qui présente un raccord d'entrée et un raccord de sortie (66), et dans laquelle la plaque de tôle supérieure (51) est en contact direct d'échange de chaleur avec le fluide de refroidissement par sa face postérieure.

4. Dispositif de guidage de feuille selon la revendication 2, **caractérisé en ce que** la chambre à fluide (23) est une chambre à air dont le raccord (27) sert à l'introduction ou à l'évacuation d'air.

5. Dispositif de guidage de feuille selon la revendication 1, **caractérisé en ce que** la soudure au laser (24, 35, 36, 58) est réalisée à partir de l'élément arrière (21, 31, 53).

6. Dispositif de guidage de feuille selon la revendication 1 ou 3, **caractérisé en ce que** la plaque de tôle supérieure (12a, 51) présente une épaisseur supérieure à celle de l'élément arrière (21, 31, 53).

7. Dispositif de guidage de feuille selon la revendication 6, **caractérisé en ce que** l'épaisseur de la plaque de tôle supérieure (51) est plus de deux fois plus grande que celle de l'élément arrière (21, 31, 53) au niveau de la soudure au laser (24, 35, 36, 58).

8. Dispositif de guidage de feuille selon la revendication 1, **caractérisé en ce que** la plaque de tôle supérieure (51) est une tôle en acier spécial qui, de préférence, présente une surface polie, dont l'état de surface correspond à une surface 3D.

9. Dispositif de guidage de feuille selon la revendication 1, **caractérisé en ce que** l'élément arrière (21, 53) a un contour essentiellement rectangulaire, dans le voisinage duquel, l'élément (21, 53) est lié à la plaque de tôle supérieure (51) et **en ce que** l'élément arrière (21, 53) présente, à distance de son bord, des surélévations (22, 56) au niveau desquelles ledit élément est lié à la plaque de tôle supérieure (12a, 51).

10. Dispositif de guidage de feuille selon la revendication 9, **caractérisé en ce que** la dépression (59) dans la plaque de tôle supérieure (51) est rectangulaire et suit le contour de la tôle arrière (53).

11. Dispositif de guidage de feuille selon la revendication 9, **caractérisé en ce que** la dépression (59), dans des portions qui s'étendent transversalement à la direction de déplacement de la feuille, est subdivisée en une ou plusieurs zones qui s'étendent en biais dans la direction transversale.

12. Dispositif de guidage de feuille selon la revendication 9, **caractérisé en ce que** les surélévations (22, 56) sont de même taille et sont disposées de manière régulière.

13. Dispositif de guidage de feuille selon la revendication 12, **caractérisé en ce que** quelques-unes des surélévations (22, 56) sont munies d'ouvertures de passage (57).

14. Dispositif de guidage de feuille selon la revendication 1, **caractérisé en ce que** les cavités (25, 32, 33, 59) dans la plaque de tôle supérieure (12a, 51) sont réalisées sous la forme de moulures, de préférence sous la forme de moulures annulaires.

15. Dispositif de guidage de feuille selon la revendication 14, **caractérisé en ce que** les surélévations (22, 56) sont liées à la plaque de tôle supérieure (51) par des soudures au laser.

16. Dispositif de guidage de feuille selon la revendication 9, **caractérisé en ce que** quelques-unes des surélévations (22, 56) sont liées à la plaque de tôle supérieure par des soudures au laser discontinues, par exemple par des soudures au laser en forme de plots ou de points.

17. Dispositif de guidage de feuille selon la revendication 14, **caractérisé en ce que** les moulures ont une largeur qui est supérieure à la largeur d'une soudure (24, 35, 36, 58).

18. Dispositif de guidage de feuille selon la revendication 14, **caractérisé en ce que** la largeur des moulures, de préférence, est nettement supérieure à deux fois la largeur d'une soudure (24, 35, 36, 58).

19. Dispositif de guidage de feuille selon la revendication 13, **caractérisé en ce que** la plaque de tôle supérieure (51), dans les zones dans lesquelles l'élément arrière (53) comporte des ouvertures de passage (57), est munie de buses à air (52) qui sont conformées de manière à produire un écoulement d'air dirigé vers la feuille.

20. Dispositif de guidage de feuille selon la revendication 19, **caractérisé en ce que** les buses à air (52) sont inclinées par rapport à la feuille.

21. Dispositif de guidage de feuille selon la revendication 19, **caractérisé en ce que** les buses à air (52) sont formées par une partie de tôle partiellement découpée et amenée par pliage hors du plan de la plaque de tôle supérieure (51).
